# EUROPÄISCHE PATENTANMELDUNG

(11) **EP 0 897 855 A1**
(43) Veröffentlichungstag der Anmeldung: **24.02.1999**
(21) Anmeldenummer: 98112538.8
(22) Anmeldetag: 07.07.1998
(51) Int. Cl.: B62D 29/00

(54) **Rahmen für ein Kraftfahrzeugteil**

(30) Priorität: 15.08.1997 DE 19735432
(71) Anmelder: Wendler Karosseriebau GmbH, 72766 Reutlingen (DE)
(72) Erfinder:
(74) Vertreter: Lempert, Jost, Dipl.-Phys. Dr. rer.nat.

(57) **Zusammenfassung**

Zur Erhaltung der bei einer Aluminium-Karosserie eines Fahrzeugs erzielten Gewichtsvorteile und gleichzeitiger Ermöglichung einer Panzerung des Fahrzeugs mit Stahlteilen sieht die Erfindung einen Rahmen für ein Kraftfahrzeugteil, insbesondere Türrahmen, vor, der gekennzeichnet ist durch ein mit einer Panzerstahleinlage (3) verstärktes Karbonprofil (2).

## Beschreibung

Die Erfindung betrifft einen Rahmen für ein Kraftfahrzeugteil, insbesondere Türrahmen.

Es sind Kraftfahrzeuge, insbesondere Personenkraftfahrzeuge, bekannt, die insbesondere zur Erreichung einer Gewichtsersparnis und damit leichten Ausgestaltung des Kraftfahrzeugs eine Voll-Leichtmetall-Karosserie aufweisen, bei der nicht nur die Karosseriebleche, sondern auch die Rahmenteile aus Leichtmetall, insbesondere Aluminium bzw. einer Aluminiumlegierung, ausgebildet sind. Dies bereitet besondere Schwierigkeiten bei der Panzerung dieser Fahrzeuge. Gepanzerten Personenkraftfahrzeugen soll nicht anzusehen sein, daß sie eine Panzerung aufweisen. Es sind daher Originalfahrzeuge durch Panzerung umzubauen bzw. gepanzerte Fahrzeuge auf der Basis von Originalserienfahrzeugen bei weitgehender Verwendung von Originalteilen zu schaffen. Die sich bei den vorgenannten Fahrzeugen mit einer Voll-Leichtmetall-Karosserie ergebenden Probleme bestehen einerseits in der Materialwahl der Rahmenteile, die ebenfalls aus Aluminium bestehen und daher mit dem Panzermaterial, nämlich Panzerstahl, schlecht verbindbar sind. Darüber hinaus weisen Aluminiumrahmen bzw. Leichtmetallrahmenteile, damit sie die erforderliche Stabilität und Steifigkeit sicherstellen, einen relativ großen Querschnitt auf, wodurch wiederum einerseits die außenseitige Unterbringung von Panzerstahlelementen und andererseits der Einsatz von Panzerglasscheiben, also gegenüber üblichen Fensterscheiben eines Fahrzeugs wesentlich verstärkten Scheiben, erschwert bzw. unmöglich gemacht wird.

Zur Überwindung der vorgenannten Probleme sieht die Erfindung einen Rahmen für ein Kraftfahrzeug, insbesondere einen Türrahmen, vor, der gekennzeichnet ist durch ein mit einer Panzerstahleinlage verstärktes Karbonprofil.

Im Gegensatz zum Original-Leichtmetall-Rahmen, der ein Hohlprofil ist, ist das Karbonprofil ein Vollprofil, welches eine Panzerstahleinlage aufweist. Hierdurch werden die vorgenannten Probleme vermieden: Die Verbindungsprobleme zwischen Leichtmetall und Stahl werden völlig vermieden bzw. umgangen. Durch die Ausbildung des Rahmen-Profils als Vollprofil aus Karbon mit einer Panzerstahleinlage wird bei geringem Gewicht, aufgrund der Verwendung von Karbon und damit Beibehaltung des Gewichtsvorteils des Leichtmetall-Rahmens, eine hohe, der Stabilität des Leichtmetall-Rahmens entsprechende Stabilität sichergestellt. Darüber hinaus kann der Querschnitt des Karbon-Profils in beliebiger Form ausgebildet sein und angepaßt werden, d.h. die Kontur des Querschnitts des Profils kann über einen Teilumfang des Querschnitts dem des Original-Leichtmetall-Profils entsprechen, so daß hier Abdeckungen und Leisten des Serienfahrzeugs eingesetzt werden können; in Bereichen, wo die Original-Kontur des Profils die oben genannten Nachteile aufweist, kann die Kontur des Querschnitts des Karbon-Profils von der Original-Kontur abweichen, so daß beispielsweise Platz für eine verstärkte bzw. gepanzerte Scheibe geschaffen werden kann. Demgemäß kann in einer äußerst bevorzugten Ausgestaltung vorgesehen sein, daß das Karbonprofil im Bereich einer Scheibe eine Ausnehmung aufweist.

Weitere bevorzugte Ausgestaltungen der Erfindung sehen vor, daß die Panzerstahleinlage einen rechteckigen Querschnitt aufweist, wobei hierdurch eine besonders gute Panzerung und damit Schießfestigkeit im Bereich der Panzerstahleinlage erreicht wird. Das Verhältnis von Länge zu Stärke des Querschnitts der Panzerstahleinlage kann insbesondere zwischen 3:1 und 15:1 und bevorzugterweise zwischen 10:1 und 15:1 liegen.

In äußerst bevorzugter Ausgestaltung ist vorgesehen, daß die Panzerstahleinlage geneigt zur Hauptebene des Rahmens im Karbonprofil ausgerichtet ist, wobei insbesondere die Panzerstahleinlage derart im Karbonprofil ausgerichtet ist, daß ihr Querschnitt schräg vom Fahrzeug- und Rahmeninneren zum Fahrzeug- und Rahmenäußeren verläuft. Durch diese Anordnung der Panzerstahleinlage wird einerseits die Möglichkeit zu einer weitgehenden Anpassung des Querschnitts des Karbonprofils an die Panzerungserfordernisse erreicht, wobei in bevorzugter weiterer Ausgestaltung vorgesehen ist, daß zwischen Panzerstahleinlage und einer Panzerscheibe eine Überdeckung gegeben ist und/oder daß die Panzerstahleinlage derart angeordnet ist, daß eine vollständige Überdeckung zwischen ihr und einem Dachgurt des Fahrzeugs gegeben ist.

Eine weitere äußerst bevorzugte Ausgestaltung sieht vor, daß der Rahmen mit einer in seiner Ebene liegenden Panzerplatte vormontiert ist, wobei weiterhin auch die Fensterheber bzw. die gesamte Fensterhebereinheit vormontiert werden kann, was bisher nicht möglich war und daher zu einer Kostenreduzierung bei der Herstellung der entsprechenden Kraftfahrzeugteile führt. Wesentlich ist, daß bis auf die für die Panzerung absolut notwendigen Elemente, nämlich den gepanzerten Rahmen selbst, die Panzerglasscheibe sowie den Rahmen ausfüllende Panzerplatten, ansonsten Originalteile des Serienfahrzeugs verwendet werden können, insbesondere Dichtungsgummis, Leisten etc.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:

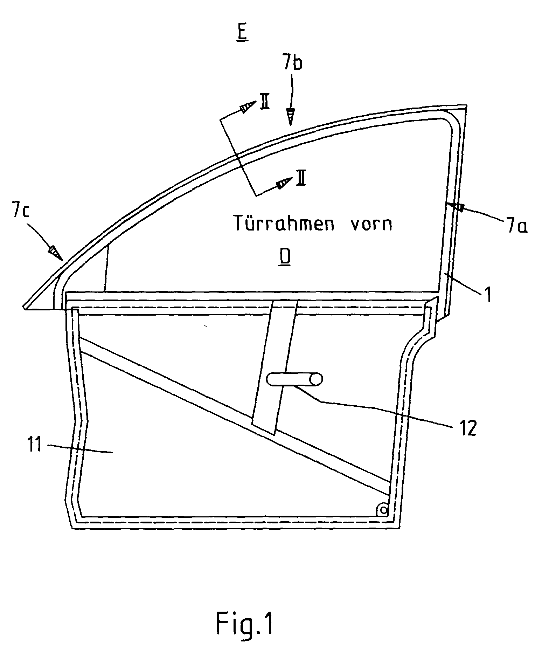

- Fig. 1: einen erfindungsgemäßen Rahmen für eine Kraftfahrzeug-Tür mit einer deren Unterteil panzernden Panzerplatte sowie Fensterheber;
- Fig. 2: einen Schnitt entsprechend II-II der Fig. 1 durch den oberen Bereich des Rahmens; und
- Fig. 3: eine Querschnittsdarstellung zum Vergleich eines Original-Aluminium-Rahmens mit einem erfindungsgemäß gepanzerten Karbon-Rahmen.

In der Zeichnung ist ein Rahmen 1 für die Vordertür eines Personenkraftfahrzeuges dargestellt. Die Erfindung bezieht sich in gleicher Weise auch auf Rahmen von Hintertüren und Heckklappen von Kraftfahrzeugen sowie sonstige Rahmenbereiche von Kraftfahrzeugen, insbesondere in Scheiben, und hier vor allem Panzerglasscheiben, tragenden Bereichen.

Der erfindungsgemäße Rahmen 1 ist ein Verbundrahmen mit einem Hauptteil 2 aus Karbon, in welches eine Panzerstahleinlage 3 eingelegt ist.

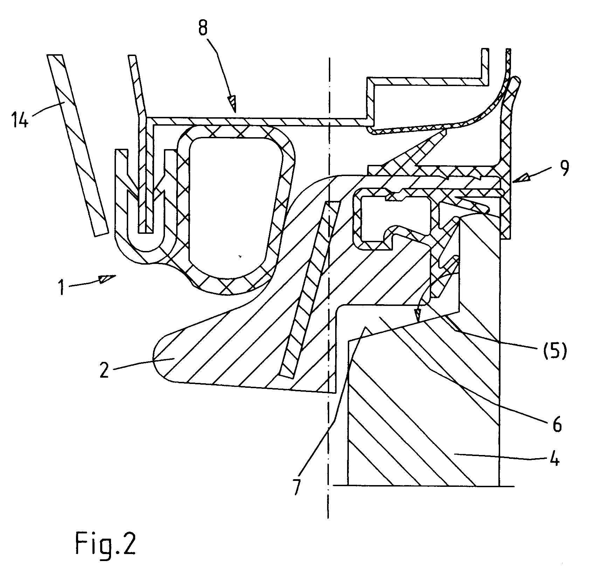

Die Panzerstahleinlage 3 weist, wie aus Fig. 2 ersichtlich, einen gestreckten rechteckigen Querschnitt auf und ist zur durch A strichpunktiert angedeuteten Hauptebene des Rahmens 1 derart geneigt angeordnet, daß der rechteckige Querschnitt der Panzerstahleinlage 3 schräg von der Fahrzeug-Innenseite B des Rahmens zur Fahrzeug-Außenseite C und vom Rahmen-Inneren D zum Rahmen-Äußeren E verläuft.

Das Verhältnis von Länge zu Breite des Querschnitts der Panzerstahleinlage 3 liegt hier etwa zwischen 10:1 und 15:1.

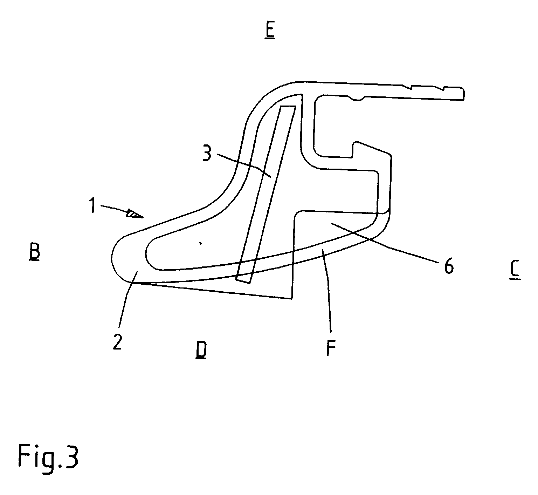

Während der Rahmen 1 und damit das Karbonprofil 2 über den gesamten einer Panzerscheibe 4 abgewandten Bereich, also über etwa 3/4 des Umfanges, dem Profil des Aluminium- Originalrahmens entspricht, weist das Karbonprofil 2 gegenüber dem hier gestrichelt angedeuteten Aluminium-Originalrahmen F zunächst im unteren Bereich oder zum Rahmeninneren hin eine Verlängerung 5 auf, diese ermöglicht, die Panzerplatten möglichst weit zum Rahmen-Inneren hin zu erstrecken. Weiterhin weist das Karbonprofil 2 gegenüber dem Aluminium-Originalrahmen F zur Scheibe 4 hin eine Ausnehmung 6 auf (Fig. 3). Hierdurch wird erreicht, daß eine Panzerglasscheibe 4 verwendet werden kann, die auf ihrer nach außen, zu C hin, gerichteten Seite der Originalscheibe entspricht, gegenüber dieser verstärkt, nämlich eben als Panzerscheibe ausgebildet ist und freie Stirnseiten 7a, 7b, 7c relativ zu ihrer Hauptebene bzw. der Ebene A mit einem Öffnungswinkel von nahezu 90° aufweist. Durch beide Formabweichungen des Karbonprofils 2 vom Profil des Originalrahmens F wird sicher eine vollständige Überdeckung von Panzerstahleinlage 3 und Panzerscheibe 4 erreicht, wie insbesondere der Fig. 2 zu entnehmen ist.

Hierzu trägt die oben erwähnte Schräganordnung der Panzereinlage 3 bei, die durch diese Schrägstellung die Ausnehmung 6 und damit die Verwendung der Panzerglasscheibe 4 in der beschriebenen Form ermöglicht.

Die Schrägstellung sichert weiterhin eine entsprechende vollständige Überdeckung bzw. Überlappung zwischen der Panzereinlage 3 und dem Dachzug 8 des Fahrzeugs.

Zwischen dem in der Ausnehmung 6 eingelassenen Original-Dichtgummi 9 und den freien Umfangsbereichen 7a-7c der Panzerglasscheibe 4 wird eine vollständige Dichtung sichergestellt.

Mit dem erfindungsgemäßen Rahmen 1 kann eine komplette Türpanzerung 11 sowie eine Fensterhebereinheit 12 vormontiert sein, was zu einer Kostenreduzierung führt.

Mit 12 ist eine Kunststoffverkleidung des Dachzugs, mit 13 die am Fahrzeug befestigte Türdichtung des Original-Fahrzeugs bezeichnet; 14 bezeichnet die seitlich heruntergezogene Dachpanzerung.

## Patentansprüche

1. Rahmen für ein Kraftfahrzeugteil, insbesondere Türrahmen, gekennzeichnet durch ein mit einer Panzerstahleinlage (3) verstärktes Karbonprofil (2).

2. Rahmen nach Anspruch 1, dadurch gekennzeichnet, daß die Panzerstahleinlage (3) einen rechteckigen Querschnitt aufweist.

3. Rahmen nach einem der vorangehenden Ansprüche, dadurch gekennzeichnet, daß die Panzerstahleinlage (3) geneigt zur Hauptebene (A) des Rahmens (1) im Karbonprofil (2) ausgerichtet ist.

4. Rahmen nach Anspruch 3, dadurch gekennzeichnet, daß die Panzerstahleinlage (3) derart im Karbonprofil (2) ausgerichtet ist, daß ihr Querschnitt schräg vom Fahrzeug- und Rahmeninneren zum Fahrzeug- und Rahmenäußeren verläuft.

5. Rahmen nach einem der vorangehenden Ansprüche, dadurch gekennzeichnet, daß die Kontur des Karbonprofils (2) in einer Scheibe (4) abgewandten Bereichen einem Original-Aluminiumrahmen entspricht.

6. Rahmen nach einem der vorangehenden Ansprüche, dadurch gekennzeichnet, daß das Karbonprofil (2) im Bereich einer Scheibe (4) eine Ausnehmung (6) aufweist.

7. Rahmen nach einem der vorangehenden Ansprüche, dadurch gekennzeichnet, daß zwischen Panzerstahleinlage (3) und einer Panzerscheibe (4) eine Überdeckung gegeben ist.

8. Rahmen nach einem der vorangehenden Ansprüche, dadurch gekennzeichnet, daß die Panzerstahleinlage (3) derart angeordnet ist, daß eine vollständige Überdeckung zwischen ihr und einem Dachgurt (8) des Fahrzeugs gegeben ist.

9. Rahmen nach einem der vorangehenden Ansprüche, dadurch gekennzeichnet, daß er mit einer in seiner Ebene liegenden Panzerplatte (9) vormontiert ist.
